(19) Europäisches Patentamt

European Patent Office

Office européen des brevets

(11) **EP 1 135 767 B1**

(12) **EUROPÄISCHE PATENTSCHRIFT**

(45) Veröffentlichungstag und Bekanntmachung des Hinweises auf die Patenterteilung:
**29.05.2002 Patentblatt 2002/22**

(51) Int Cl.⁷: **G10L 15/18**

(21) Anmeldenummer: **99957254.8**

(22) Anmeldetag: **01.10.1999**

(86) Internationale Anmeldenummer:
**PCT/DE99/03176**

(87) Internationale Veröffentlichungsnummer:
**WO 00/25299 (04.05.2000 Gazette 2000/18)**

(54) **VERFAHREN UND ANORDNUNG ZUR KLASSENBILDUNG FÜR EIN SPRACHMODELL BASIEREND AUF LINGUISTISCHEN KLASSEN**

METHOD AND LAYOUT FOR FORMING CLASSES FOR A LANGUAGE MODEL BASED ON LINGUISTIC CLASSES

PROCEDE ET AGENCEMENT PERMETTANT DE FORMER DES CLASSES DANS UN MODELE DE LANGAGE BASE SUR DES CLASSES LINGUISTIQUES

(84) Benannte Vertragsstaaten:
**BE DE FI FR GB NL**

(30) Priorität: **27.10.1998 DE 19849546**

(43) Veröffentlichungstag der Anmeldung:
**26.09.2001 Patentblatt 2001/39**

(73) Patentinhaber: **SIEMENS AKTIENGESELLSCHAFT**
**80333 München (DE)**

(72) Erfinder: **WITSCHEL, Petra**
**D-80687 München (DE)**

(56) Entgegenhaltungen:
- **MASATAKI H ET AL: "Variable-order N-gram generation by word-class splitting and consecutive word grouping" 1996 IEEE INTERNATIONAL CONFERENCE ON ACOUSTICS, SPEECH, AND SIGNAL PROCESSING CONFERENCE PROCEEDINGS (CAT. NO.96CH35903), 1996 IEEE INTERNATIONAL CONFERENCE ON ACOUSTICS, SPEECH, AND SIGNAL PROCESSING CONFERENCE PROCEEDINGS, ATLANTA, GA, USA, 7-10 M, Seiten 188-191 vol. 1, XP002133222 1996, New York, NY, USA, IEEE, USA ISBN: 0-7803-3192-3**
- **NEY H ET AL: "ON STRUCTURING PROBABILISTIC DEPENDENCES IN STOCHASTIC LANGUAGE MODELLING" COMPUTER SPEECH AND LANGUAGE,GB,ACADEMIC PRESS, LONDON, Bd. 8, Nr. 1, 1. Januar 1994 (1994-01-01), Seiten 1-38, XP000452242 ISSN: 0885-2308**
- **NIESLER T R ET AL: "COMPARISON OF PART-OF-SPEECH AND AUTOMATICALLY DERIVED CATEGORY- BASED LANGUAGE MODELS FOR SPEECH RECOGNITION" IEEE INTERNATIONAL CONFERENCE ON ACOUSTICS, SPEECH AND SIGNAL PROCESSING,US,NEW YORK, NY: IEEE, Bd. CONF. 23, 1998, Seiten 177-180, XP000854544 ISBN: 0-7803-4429-4**

**Beschreibung**

Die Erfindung betrifft ein Verfahren und eine Anordnung zur Klassenbildung für ein Sprachmodell basierend auf linguistischen Klassen durch einen Rechner.

Ein Verfahren zur Spracherkennung ist aus [1] bekannt. Dabei ist es als ein Bestandteil der Worterkennung üblich, die Brauchbarkeit einer Folge aus mindestens einem Wort anzugeben. Ein Maß für diese Brauchbarkeit ist eine Wahrscheinlichkeit.

Ein statistisches Sprachmodell ist aus [2] bekannt. So kennzeichnet die Wahrscheinlichkeit P(W) für eine Wortfolge W im Rahmen der Spracherkennung, vorzugsweise großer Vokabularmengen, allgemein ein (statistisches) Sprachmodell. Die Wahrscheinlichkeit P(W) (sog.: Wortfolgewahrscheinlichkeit) wird angenähert durch ein N-Gramm-Sprachmodell $P_N(W)$:

$$P_N(W) = \prod_{i=0}^{n} P\big(w_i \mid w_{i-1}, w_{i-2}, \ldots, w_{i-N+1}\big), \qquad (0\text{-}1)$$

wobei

$w_i$     das i-te Wort der Folge W mit (i=l..n), n),

n     die Anzahl der Wörter $w_i$ der Folge W

bezeichnen.

Für N=2 ergeben sich aus Gleichung (0-1) sogenannte Bigramme.

Ferner ist bekannt, bei der Spracherkennung, vorzugsweise im kommerziellen Umfeld, ein im Vokabular beschränktes Anwendungsgebiet (Domäne) zu verwenden. Texte verschiedener Domänen unterscheiden sich nicht nur im Hinblick auf ihr jeweiliges Vokabular, sondern auch hinsichtlich ihres jeweiligen Satzaufbaus. Für ein Trainieren eines Sprachmodells für eine spezielle Domäne ist eine entsprechend große Menge an Texten (Textmaterial, Textkorpus) notwendig, das jedoch in der Praxis nur selten vorhanden oder nur mit immensem Aufwand zu gewinnen ist.

Ein linguistisches Lexikon ist aus [4] bekannt. Dabei handelt es sich um eine auf einem Rechner verfügbare Zusammenstellung möglichst vieler Wörter einer Sprache zum Zwecke des Nachschlagens von linguistischen Eigenschaften anhand eines Suchprogramms. Für jeden Worteintrag (sog. Wortvollform) können die für diese Wortvollform relevanten linguistischen Merkmale und die zutreffenden Belegungen, also die linguistischen Werte, entnommen werden.

Aus [3] ist bekannt, linguistische Klassen zu verwenden. Wörter eines Satzes können auf unterschiedliche Arten in linguistischen Merkmalen und linguistischen Werten zugeordnet werden. In Tabelle 1 sind beispielhaft verschiedene linguistischen Merkmale und die zugehörigen Werte dargestellt (weitere Beispiele sind in [3] angegeben).

Tabelle 1:

| *Beispiele für ling. Merkmale und ling. Werte* | |
|---|---|
| **ling. Merkmal** | **linguistische Werte** |
| Kategorie | Substantiv, Verb, Adjektiv, Artikel, Pronomen, Adverb, Konjunktion, Präposition, etc. |
| Typ des Substantivs | abstrakt, tierisch, als Teil des Körpers, konkret, menschlich, örtlich, materiell, als Maß, pflanzlich, zeitlich, etc. |
| Art des Pronomens | demonstrativ, indefinit, interrogativ, possessiv, etc. |

Basierend auf linguistischen Merkmalen

$$(f_1, \ldots, f_m) \qquad (0\text{-}2)$$

und linguistischen Werten

$$(v_{11}...v_{1j}) ... (v_{m1}...v_{mj}) \qquad (0\text{-}3)$$

wird jedem Wort mindestens eine linguistische Klasse zugewiesen, wobei folgende Abbildungsvorschrift F Anwendung findet:

$$(c_1, \ldots, c_k) = F\left(\left(f_1, v_{11}, \ldots, v_{1j}\right) \ldots \left(f_m, v_{m1}, \ldots, v_{mj}\right)\right) \quad (0\text{-}4)$$

wobei

| | |
|---|---|
| $f_m$ | ein linguistisches Merkmal, |
| m | die Anzahl linguistischer Merkmale, |
| $v_{m1}...v_{mj}$ | die linguistischen Werte des linguistischen Merkmals $f_m$, |
| j | die Anzahl der linguistischen Werte, |
| $C_i$ | die linguistische Klasse mit i=1..k, |
| k | die Anzahl der linguistischen Klassen, |
| F | eine Abbildungsvorschrift (Klassifikator) von linguistischen Merkmalen und linguistischen Werten auf linguistische Klassen |

bezeichnen.

Eine spezielle linguistische Klasse stellt dabei die Klasse der Wörter mit unbekannten oder nicht anders abbildbaren linguistischen Eigenschaften dar.

Zur Veranschaulichung der linguistischen Klasse, des linguistischen Merkmals (engl. feature), des linguistischen Werts (engl. value) und der Klassen-Bigramm-Wahrscheinlichkeit wird nachfolgend ein Beispiel erläutert.

Ausgegangen wird von dem *deutschen* Satz:
"der Bundestag setzt seine Debatte fort"

Der Artikel "der" (also das erste Wort) kann im Deutschen in sechs linguistische Klassen (fortan nur: Klassen) unterteilt werden, wobei sich die Klassen in Numerus, Genus und Kasus unterscheiden. Die folgende Tabelle 2 veranschaulicht diesen Zusammenhang:

Tabelle 2:

| Klassen $C_i$ für das Wort "der" | | | | |
|---|---|---|---|---|
| $C_i$ | Kategorie | Numerus | Genus | Kasus |
| $C_1$ | Artikel | Singular | maskulinum | Nominativ |
| $C_2$ | Artikel | Singular | femininum | Genitiv |
| $C_3$ | Artikel | Singular | femininum | Dativ |
| $C_4$ | Artikel | Plural | femininum | Genitiv |
| $C_5$ | Artikel | Plural | maskulinum | Genitiv |
| $C_6$ | Artikel | Plural | neutrum | Genitiv |

Für das deutsche Substantiv "Bundestag" (zweites Wort des obigen Beispielsatzes) folgt analog Tabelle 3:

Tabelle 3:

| Klassen $C_i$ für das Wort "Bundestag" | | | | |
|---|---|---|---|---|
| $C_i$ | Kategorie | Numerus | Genus | Kasus |
| $C_7$ | Substantiv | Singular | maskulinum | Nominativ |
| $C_8$ | Substantiv | Singular | maskulinum | Akkusativ |
| $C_9$ | Substantiv | Singular | maskulinum | Dativ |

EP 1 135 767 B1

In diesem Beispiel folgt nun im Hinblick auf Klassen-Bigramme, also Bigramme angewandt auf linguistische Klassen, daß die Klasse $C_1$, gefolgt von der Klasse $C_7$ die richtige Kombination von Kategorie, Numerus, Kasus und Genus bezüglich des Beispielsatzes darstellt. Wenn Häufigkeiten real vorkommender Klassen-Bigramme aus vorgegebenen Texten bestimmt werden, so folgt für das obige Klassen-Bigramm $C_1$-$C_7$ ein zahlreiches Auftreten, da diese Kombination in der deutschen Sprache oft vorkommt, wohingegen anderer Klassen-Bigramme, z.B. die Kombination $C_2$-$C_8$ in der deutschen Sprache wegen unterschiedlicher Geni nicht erlaubt ist. Die sich aus den auf diese Art gefundenen Häufigkeiten ergebenden Klassen-Bigramm-Wahrscheinlichkeiten sind entsprechend hoch (bei oftmaligem Auftreten) bzw. niedrig (falls nicht zulässig).

Bei der Klassenbildung wird in [7] von statistischen Eigenschaften ausgegangen. Derartige Klassen weisen keine bestimmten linguistischen Eigenschaften auf, die im Sprachmodell entsprechend eingesetzt werden können.

Die übliche Klassenbildung erfolgt manuell durch Einsatz von Linguisten, die ein Sprachmodell nach linguistischen Eigenschaften sortieren. Ein derartiger Prozeß ist äußerst langwierig und durch die Experten auch recht kostspielig.

Die **Aufgabe** der Erfindung besteht darin, eine Klassenbildung für ein auf linguistischen Klassen basierendes Sprachmodell automatisch und ohne den Einsatz von Expertenwissen zu ermöglichen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Klassenbildung für ein auf linguistischen Klassen basierendes Sprachmodell mittels eines Rechners angegeben, bei dem anhand einer ersten Abbildungsvorschrift eine Anzahl N Klassen bestimmt wird mittels eines vorgegebenen Vokabulars mit zugehörigen linguistischen Eigenschaften. Aus N Klassen werden K Klassen (K<N) ermittelt, indem eine Sprachmodellentropie H minimiert wird. Mit den K Klassen wird eine zweite Abbildungsvorschrift, die Klassenbildung des Sprachmodells, dargestellt.

Hierbei ist es von Vorteil, daß vollständig automatisiert eine Klassenbildung ermittelbar ist. Weder ein speziell geschulter Experte übernimmt eine umständliche händische Zuordnung, noch wird durch statistische Maßnahmen die linguistische Bedeutung der Klassen aufgeweicht. Durch die Bedingung, daß K kleiner als N ist, wird die Menge der Klassen deutlich reduziert und somit ein performantes Sprachmodell bestimmt.

Eine Weiterbildung besteht darin, daß die N Klassen ermittelt werden, indem alle möglichen Kombinationen von linguistischen Merkmalen und zugehörigen linguistischen Werten bestimmt werden und jede der Kombinationen zu einer eigenen linguistischen Klasse führt. Die Zahl N ist somit bestimmt durch die maximal mögliche Anzahl Klassen (bezogen auf den zugrundeliegenden Text).

Auch ist es eine Weiterbildung, die linguistischen Werte anhand eines linguistischen Lexikons zu ermitteln. Ein solches linguistisches Lexikon ist u.a. für die Sprache Deutsch erhältlich (siehe [4]).

Auch wird zur Lösung der Aufgabe ein Verfahren zur Klassenbildung für ein Sprachmodell basierend auf linguistischen Klassen durch einen Rechner angegeben, bei dem anhand einer ersten Abbildungsvorschrift N Klassen vorgegeben sind. Aus den N Klassen werden K Klassen bestimmt, indem eine Sprachmodellentropie minimiert wird. Anhand der K Klassen wird eine zweite Abbildungsvorschrift zur Klassenbildung von Sprachmodellen, die auf linguistischen Klassen basieren, dargestellt.

Im Rahmen einer zusätzlichen Weiterbildung werden die K Klassen ermittelt, indem folgende Schritte durchgeführt werden:

a) Eine Anzahl M der wahrscheinlichsten unter den N Klassen werden als Basisklassen ermittelt;
b) eine der verbleibenden (N-M)-Klassen wird mit derjenigen Basisklasse zusammengelegt, bei der die Sprachmodellentropie minimiert wird.

Dabei werden die (bezogen auf den zugrundeliegenden Text) M wahrscheinlichsten Klassen bestimmt. Auch können die obigen Schritte iterativ für mehrere oder alle verbleibenden (N-M)-Klassen durchgeführt werden.

Eine Ausgestaltung besteht darin, daß die Sprachmodellentropie bestimmt ist durch

$$H(LM) = -\frac{1}{n} \cdot \log P(W), \qquad (1)$$

wobei

H(LM)    die Sprachmodellentropie des Sprachmodells,
n        die Anzahl der Wörter des Textes,
W        eine Kette von Wörtern $w_0, w_1,.., w_n$,
P(W)     eine Wahrscheinlichkeit für das Auftreten einer Folge von mindestens zwei Wörtern

beschreiben.

Eine andere Ausgestaltung besteht darin, daß das beschriebene Verfahren zur Bestimmung einer Wahrscheinlichkeit für das Auftreten einer Folge von mindestens zwei Wörtern in der Spracherkennung eingesetzt wird. Eine Sprache weist linguistische Klassen

$$(c_1, \ldots, c_k) \tag{2}$$

gemäß

$$(c_1, \ldots, c_k) = F\left(\left(f_1, v_{11}, \ldots, v_{1j}\right) \ldots \left(f_m, v_{m1}, \ldots, v_{mj}\right)\right) \tag{3},$$

auf, wobei

| | |
|---|---|
| $f_m$ | ein linguistisches Merkmal, |
| $m$ | die Anzahl linguistischer Merkmale, |
| $v_{m1} \ldots v_{mj}$ | die linguistischen Werte des linguistischen Merkmals $f_m$, |
| $j$ | die Anzahl der linguistischen Werte, |
| $C_i$ | die linguistische Klasse mit $i=1..k$, |
| $k$ | die Anzahl der linguistischen Klassen, |
| $F$ | eine Abbildungsvorschrift (Klassifikator) von linguistischen Merkmalen und linguistischen Werten auf linguistische Klassen |

bezeichnen.

Dabei wird einem Wort mindestens einer der linguistischen Klassen zugeordnet. Eine Wahrscheinlichkeit P(W) für das Auftreten der Folge von mindestens zwei Wörtern ergibt sich unter Verwendung von Bigrammen zu

$$P(W) \approx \prod_{i=1}^{n} \sum_{C_i} \sum_{C_{i-1}} P\left(w_i | C_i\right) \times P\left(C_i | C_{i-1}\right) \times P\left(C_{i-1} | w_{i-1}\right) \tag{4}$$

wobei

| | |
|---|---|
| $W$ | die Folge von mindestens zwei Wörtern, |
| $w_i$ | das i-te Wort der Folge W mit ($i=1..n$), |
| $n$ | die Anzahl der Wörter $w_i$ der Folge W, |
| $C_i$ | eine linguistische Klasse, die zu einem Wort $w_i$ gehört, |
| $C_{i-1}$ | eine linguistische Klasse, die zu einem Wort $w_{i-1}$ gehört, |
| $\Sigma_{Ci}$ | die Summe über alle linguistischen Klassen C, die zu einem Wort $w_i$ gehören, |
| $P(w_i|C_i)$ | die bedingte Wortwahrscheinlichkeit, |
| $P(C_i|C_{i-1})$ | die Wahrscheinlichkeit für Bigramme (auch: Klassen-Bigramme-Wahrscheinlichkeit), |
| $P(C_{i-1}|w_{i-1})$ | die bedingte Klassenwahrscheinlichkeit |

bezeichnen.

Hierbei sei angemerkt, daß sich der Term $C_i$ auf eine der mindestens einen linguistischen Klasse bezieht, die dem Wort $w_i$ aus der Wortfolge W zugeordnet wird. Das gleiche gilt entsprechend für den Term $C_{i-1}$. Beispielsweise handelt es sich bei der Klassen-Bigramm-Wahrscheinlichkeit um die Wahrscheinlichkeit dafür, daß das Wort $w_i$ einer ersten linguistischen Klasse angehört unter der Bedingung, daß das vorhergehende Wort $w_{i-1}$ einer zweiten linguistischen Klasse angehört (siehe hierzu einleitendes Beispiel mit Erläuterung).

Die Wahrscheinlichkeiten $P(w_i|C_i)$ und $P(C_i|C_{i-1})$, die eingesetzt in Gleichung (4) ein sogenanntes Basissprachmodell ergeben, können aus einem Textkorpus, also aus einem vorgegebenem Text mit vorgegebenem Umfang, bestimmt werden.

Sprachmodelle, die auf linguistischen Klassen basieren, bieten insbesondere für eine Adaption entscheidende Vorteile. Das hier vorgestellte Verfahren verwendet die in den Sprachmodellen enthaltenen linguistischen Eigenschaften.

Eine Weiterbildung besteht darin, daß für einen neuen Text anhand eines vorbestimmten Basissprachmodells die Wahrscheinlichkeit

$$P\left(C_i \mid C_{i-1}\right)$$

in das Basissprachmodell für den neuen Text übernommen wird.

Wahrscheinlichkeiten für Klassen-Bigramme des Basissprachmodells (siehe [3] und Erläuterung in der Einleitung) stellen einerseits eine grammatikalische Struktur des Trainingstextes dar und sind andererseits vom Vokabular unabhängig. Geht man davon aus, daß die neue Domäne von ähnlicher Textstruktur (grammatikalischer Struktur) wie der ursprüngliche Trainingstext für das Basissprachmodell ist, so ist es zweckmäßig, die Wahrscheinlichkeit für die Klassen-Bigramme

$$P\left(C_i \mid C_{i-1}\right)$$

aus dem Basissprachmodell unverändert zu übernehmen.

Das Vokabular für die neue Domäne, für die ein Sprachmodell bestimmt wird, wird mit Hilfe eines vorgegebenen linguistischen Lexikons und unter Verwendung eines Klassifikators F gemäß Gleichung (3) bearbeitet. Für jedes neue Wort aus dem Text wird automatisch mindestens eine linguistische Klasse bestimmt. Zur detaillierten Beschreibung von linguistischen Klassen, linguistischen Merkmalen und linguistischen Werten siehe [3], zum linguistischen Lexikon siehe [4] und/oder jeweils die Einleitung.

Eine andere Weiterbildung besteht darin, die Wahrscheinlichkeit

$$P\left(w_i \mid C_i\right)$$

nach mindestens einer der folgenden Möglichkeiten zu bestimmen:

a) die Wahrscheinlichkeit

$$P\left(w_i \mid C_i\right)$$

wird anhand des Textes bestimmt;

b) die Wahrscheinlichkeit

$$P\left(w_i \mid C_i\right)$$

wird für ein Wort $w_i$ mit Hilfe einer vorgegebenen Wahrscheinlichkeit $P(w_i)$ bestimmt;

c) die Wahrscheinlichkeit

$$P\left(w_i \mid C_i\right)$$

wird unter Verwendung einer Wortliste bestimmt.

Eine zusätzliche Weiterbildung besteht darin, anhand der ermittelten Wahrscheinlichkeit

$$P\left(w_i | C_i\right)$$

das Basissprachmodell anzupassen. Dies geschieht vorzugsweise derart, daß diese ermittelten Wahrscheinlichkeiten

$$P\left(w_i | C_i\right)$$

in das Basissprachmodell aufgenommen werden.

Auch ist es eine Weiterbildung, die Wahrscheinlichkeit

$$P\left(C_{i-1} | w_{i-1}\right)$$

anhand der Wahrscheinlichkeit $P(w_i|C_i)$ wie folgt zu bestimmen:

$$P\left(C_i | w_i\right) = K \times P\left(w_i | C_i\right) \times P\left(C_i\right) \tag{5}$$

wobei

$$K = \left(\sum_{C_i} P\left(w_i | C_i\right) \times P\left(C_i\right)\right)^{-1} \tag{6}$$

einen Normalisierungsfaktor bezeichnet.

Eine andere Weiterbildung besteht darin, eine entsprechende Folge von mindestens einem Wort zu erkennen, falls die Wahrscheinlichkeit $P(W)$ oberhalb einer vorgegebenen Schranke liegt. Ist dies nicht der Fall, so wird eine vorgegebene Aktion durchgeführt. Diese vorgegebene Aktion ist z.B. die Ausgabe einer Fehlermeldung oder der Abbruch des Verfahrens.

Im Rahmen einer anderen Weiterbildung bezieht sich der Text auf einen vorgegebenen Anwendungsbereich, eine sogenannte (Sprach-, Anwendungs-) Domäne.

Dabei ist es besonders von Vorteil, daß das vorgestellte Verfahren einen neuen Text von nur geringem Umfang für die Bestimmung eines Sprachmodells einer neuen Domäne benötigt.

Auch ist von Vorteil, daß Listen von neuen Wörtern (mit oder ohne Angabe der Wahrscheinlichkeit $P(w_i)$) verwendet werden können. Domänenbezogene Spracherkennung spielt in der Praxis eine große Rolle. Das Verfahren begegnet somit einer realen Anforderung und hat sich im Experiment als geeignet und überaus nützlich erwiesen. Greift man auf das Basissprachmodell zurück, so reduziert sich die Anzahl der neu abzuschätzenden Wahrscheinlichkeiten (Abschätzung nur von

$$P\left(w_i | C_i\right)$$

notwendig) erheblich.

Weiterhin wird zur Lösung der Aufgabe eine Anordnung zur Klassenbildung für ein Sprachmodell basierend auf linguistischen Klassen angegeben, die eine Prozessoreinheit aufweist, welche Prozessoreinheit derart eingerichtet ist, daß

a) anhand einer ersten Abbildungsvorschrift eine Anzahl N Klassen bestimmbar ist mittels eines vorgegebenen Vokabulars mit zugehörigen linguistischen Eigenschaften;
b) K Klassen aus den N Klassen ermittelt werden, indem eine Sprachmodellentropie minimiert wird;
c) anhand der K Klassen eine zweite Abbildungsvorschrift zur Klassenbildung von Sprachmodellen auf linguistische Klassen erfolgt.

Auch wird zur Lösung der Aufgabe eine Anordnung zur Klassenbildung für ein Sprachmodell basierend auf linguistischen Klassen angegeben, bei der eine Prozessoreinheit vorgesehen ist, die derart eingerichtet ist, daß

a) anhand einer ersten Abbildungsvorschrift N Klassen vorgebbar sind;
b) K Klassen aus den N Klassen ermittelt werden, indem eine Sprachmodellentropie minimiert wird;
c) anhand der K Klassen eine zweite Abbildungsvorschrift zur Klassenbildung von Sprachmodellen auf linguistische Klassen erfolgt.

Diese Anordnungen sind insbesondere geeignet zur Durchführung eines erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig. 1   ein Blockdiagramm, das Schritte eines Verfahrens zur Bestimmung einer Wahrscheinlichkeit für das Auftreten einer Folge von mindestens einem Wort bei einer Spracherkennung durch einen Rechner umfaßt;

Fig.2   ein erstes Adaptionsverfahren zur Bestimmung der Wahrscheinlichkeit

$$P\left(w_i | C_i\right);$$

Fig.3   ein zweites Adaptionsverfahren zur Bestimmung der Wahrscheinlichkeit

$$P\left(w_i | C_i\right);$$

Fig.4   ein Blockdiagramm mit Schritten eines Verfahrens zur Klassenbildung für ein Sprachmodell;

Fig.5   ein Blockdiagramm mit Komponenten zur automatischen Bestimmung einer Abbildungsvorschrift zur Klassenbildung;

Fig.6   ein Blockdiagramm zur Optimierung eines bestehenden Sprachmodells;

Fig.7   ein Ablaufdiagramm einer Optimierungsstrategie zur automatischen Bestimmung einer Klassenbildung;

Fig.8   eine Prozessoreinheit.

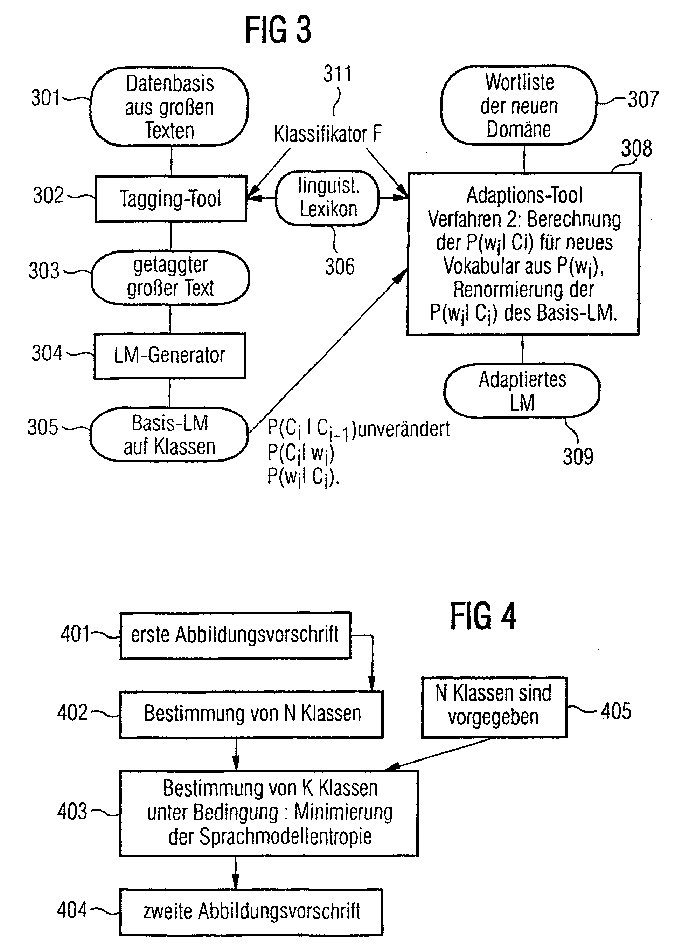

In **Fig.4** ist ein Blockdiagramm mit Schritten eines Verfahrens zur Klassenbildung für ein Sprachmodell dargestellt.

In einem ersten Fall werden, ausgehend von einer ersten Abbildungsvorschrift (vgl. Schritt 401) N Klassen nach einer vorgegebenen Bedingung bestimmt. Eine Möglichkeit besteht darin, die N Klassen als alle maximal möglichen Klassen zu ermitteln, indem alle möglichen Kombinationen von linguistischen Merkmalen und zugehörigen linguistischen Werten ermittelt werden und jede der Kombinationen eine eigene Klasse ergibt (vgl. Schritt 402). In einem Schritt 403 werden K Klassen mit Hilfe der N Klassen ermittelt unter Berücksichtigung der Bedingung, daß eine Sprachmodellentropie minimiert wird. Die auf diese Art gewonnenen K Klassen stellen eine zweite Abbildungsvorschrift (vgl. Schritt 404) dar, anhand derer eine Klassenbildung nach linguistischen Klassen für ein Sprachmodell erfolgt.

In einem zweiten Fall, wird von einem bestehenden Sprachmodell mit einer ersten Abbildungsvorschrift und N vorgegebenen Klassen ausgegangen (vgl. Schritt 405). Die nachfolgenden Schritte 403 und 404 ermöglichen eine Anpassung des bestehenden Sprachmodells, indem wiederum eine Klassenbildung für eine Sprachmodell erfolgt, das gegenüber dem ursprünglichen Sprachmodell im Hinblick auf die linguistischen Klassen optimiert wird.

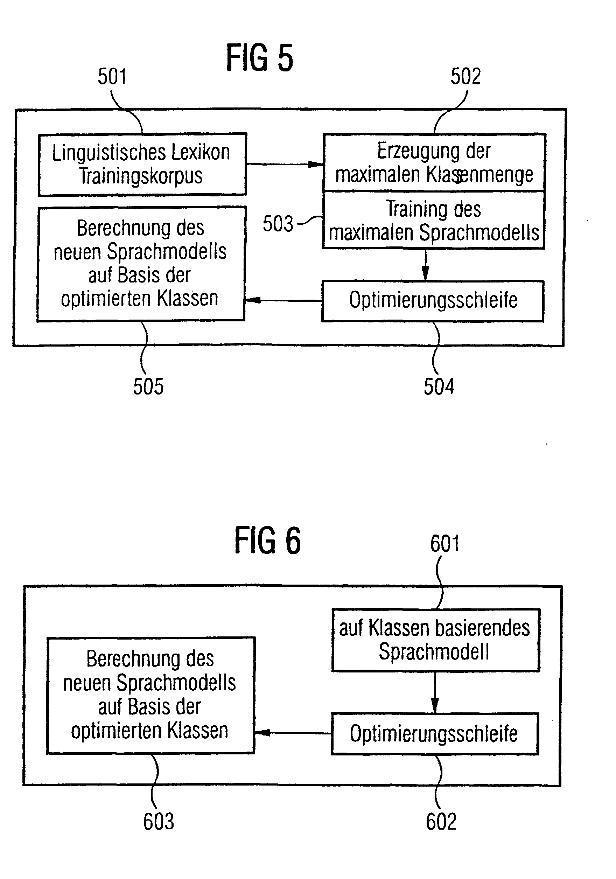

Der in Fig.4 dargestellte Zusammenhang wird nochmals in **Fig.5** und **Fig.6** veranschaulicht.

Wie bereits erwähnt, wird im vorliegenden Fall diejenige Abbildungsvorschrift zur Klassenbildung basierend auf linguistischen Eigenschaften gesucht, die die Sprachmodellentropie des über diesen Klassen erzeugten Sprachmodells minimiert (wird nachfolgend auch als Optimierungskriterium bezeichnet). Zum Generieren von Sprachmodellen auf linguistischen Klassen ist eine Abbildungsvorschrift notwendig, die jedem Wort mindestens eine linguistische Klasse zuordnet. Die Klassenbildung erfolgt auf Basis von linguistischen Eigenschaften. Entsprechend den linguistischen Merkmalen nach Gleichung (0-2) und den linguistischen Werten nach Gleichung (0-3) werden jedem Wort eine oder mehrere Klassen zugewiesen. Die linguistischen Merkmale und die linguistischen Werte sind dabei einem linguistischen Lexikon (vgl. [4]) entnommen.

Die Abbildungsvorschrift (Klassifikator) F der linguistischen Merkmale und ihrer linguistischen Werte auf Klassen, wird gemäß Gleichung (3) definiert.

Zunächst wird eine Abbildungsvorschrift L bestimmt, die bei gegebenen Vokabular und aus dem linguistischen Lexikon vorgegebenen linguistischen Eigenschaften die maximal mögliche Anzahl N von Klassen erzeugt:

$$L\left(\left(f_1, v_{11}, \ldots, v_{1j}\right) \cdot \cdot \left(f_m, v_{m1}, \ldots, v_{mj}\right)\right) = C_I^L \qquad (7)$$
$$\text{mit } I \in \{1, N\},$$

wobei

$$\left(f_1, v_{11}, \ldots, v_{1j}\right) \cdot \cdot \left(f_m, v_{m1}, \ldots, v_{mj}\right)$$

eine Merkmals-Wertekombination des Domänenlexikons bezeichnet.

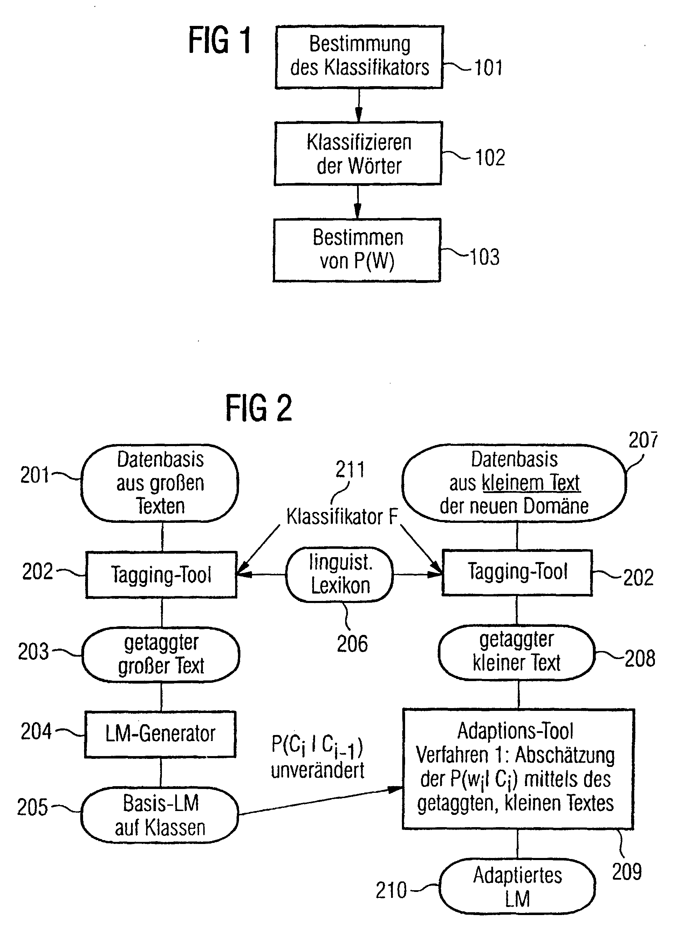

Wissensquelle dafür sind ein die gegebene Domäne repräsentierender Trainingskorpus und ein sein Vokabular umfassendes linguistisches Lexikon (vgl. Block 501 in Fig.5). Auf den maximalen Klassen N (vgl. Block 502) wird das Sprachmodell trainiert (vgl. Block 503). Zum Training des Sprachmodells siehe Fig.2 und zugehörige Beschreibung. In einem Block 504 erfolgt die Optimierung: Die maximal möglichen Klassen N werden so zusammengefaßt, daß ein Optimierungskriterium erfüllt ist. Basierend auf den neuen K Klassen wird ein Sprachmodell bestimmt (vgl. Block 505).

Alternativ zu einem maximalen Sprachmodell kann jedes klassenbasierte Sprachmodell der Optimierung unterzogen werden. In diesem Fall sind N Klassen vorgegeben (vgl. Block 601, Fig.6), die Optimierungsschleife (Block 602) und die nachfolgende Berechnung des neuen Sprachmodells auf Basis der optimierten Klassen (Block 603) sind analog zu Fig.5.

Um die maximale Anzahl N Klassen zu ermitteln, werden alle möglichen Kombination von linguistischen Merkmalen gemäß Gleichung (0-2) und zugehörigen linguistischen Werten gemäß Gleichung (0-3) bestimmt, die im linguistischen Lexikon als Eigenschaften des (Domänen-)Vokabulars enthalten sind. Jede solche Merkmals-Wertekombination wird zur Definition einer neuen Wortklasse der maximal möglichen Anzahl N Klassen herangezogen. Die Abbildungsvorschrift L , siehe Gleichung (7) bildet jeweils eine der maximal möglichen Merkmals-Wertekombinationen des Lexikons auf eine der N Klassen der maximalen Klassenmenge ab.

In der Optimierungsschleife wird nach einer Abbildung $\underline{OPT_M}$ gesucht, die die Entropie H(LM) des Sprachmodells LM(OPT$_M$) minimiert. Das Sprachmodell basiert auf der durch $\overline{OPT_M}$ bestimmten Klasseneinteilung:

$$\underline{OPT_M} = \arg\min_{OPT_M \in \Phi_M} H\left(LM\left(OPT_M\right)\right) \qquad (8),$$

wobei $\Phi_M$ eine Menge der möglichen Abbildungen OPT$_M$ bezeichnet, für die gilt:

$$OPT_M\left(C_1^L, \ldots, C_N^L\right) = \left(C_1^O, \ldots, C_M^O\right) \qquad (9),$$

wobei

$C_I^L$     mit I=1,..,N die Klassen der maximalen Klassenmenge und
$C_O^O$     mit o=1,..,M die Klassen der optimierten Klassenmenge (K Klassen)

bezeichnen.

Somit gilt:

$$c_0^O = \bigcup_{I \in \{1,N\}} c_I^L \qquad (10),$$

d.h. $c_0^O$ ist die Vereinigung (Cluster) von Klassen aus der maximalen Klassenmenge. Die Vereinigung erfolgt über linguistische Merkmale und linguistische Werte der zu vereinigenden Klassen. Zum Beispiel ist

$$c_1^L \cup c_2^L = \{w_i | A \vee B\} \qquad (11)$$

mit:

$$A: L\Big(\big(f_1(w_i), v_{11}(w_i), \ldots, v_{1j}(w_i)\big) \cdot \big(f_m(w_i), v_{m1}(w_i), \ldots, v_{mj}(w_i)\big)\Big) = c_1^L$$

und

$$B: L\Big(\big(f_1(w_i), v_{11}(w_i), \ldots, v_{1j}(w_i)\big) \cdot \big(f_m(w_i), v_{m1}(w_i), \ldots, v_{mj}(w_i)\big)\Big) = c_2^L.$$

Die Sprachmodellentropie H(LM) ist gegeben durch Gleichung (1) wobei P(W) ein genäherter Wert sein kann. Für den Wert P(W) gilt Gleichung (4).

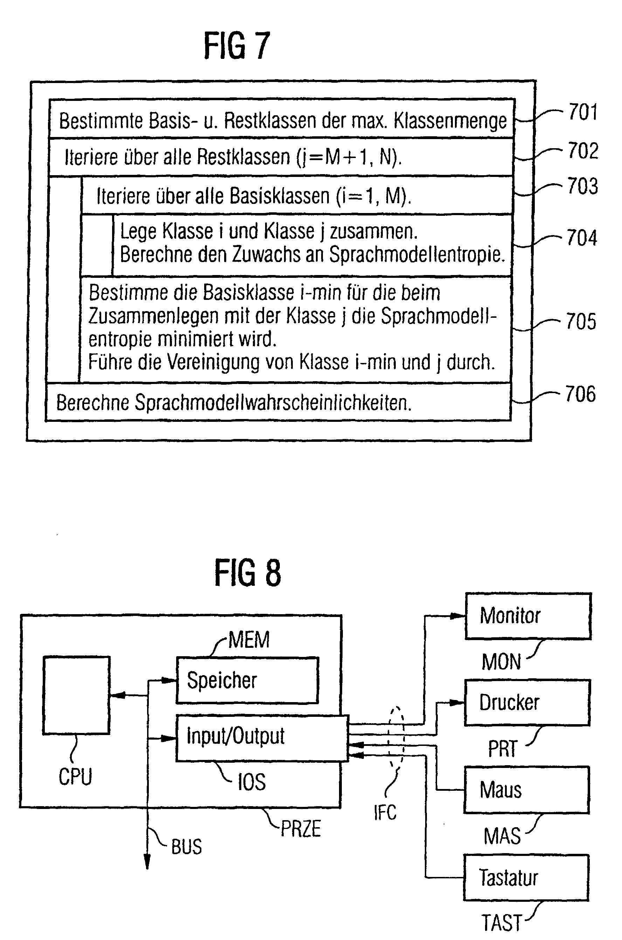

In **Fig.7** ist eine Optimierungsstrategie in Form eines Ablaufdiagramms dargestellt. Um die Anzahl der Klassen N zu reduzieren, werden die Klassen N zusammengelegt. Dabei alle Möglichkeiten der Vereinigungen von Klassen zu berücksichtigen, ist in der Praxis äußerst aufwendig. Vorzugsweise wird daher anders verfahren: M sei die gewünschte Anzahl der optimierten Klassen. Die Wahrscheinlichkeitswerte des Sprachmodells der N Klassen werden eingesetzt, um die wahrscheinlichsten M Klassen unter den N Klassen als Basisklassen zu ermitteln. Die verbleibenden N-M Klassen bilden die Restklassen (vgl. Schritt 701 in Fig.7). Innerhalb jeder Schleife der Optimierung wird eine der Restklassen mit derjenigen Basisklasse zusammengelegt, so daß dabei eine Zunahme der Sprachmodellentropie minimiert wird (vgl. Schritte 702 bis 705). Werden zwei Klassen zusammengelegt, so werden die Wahrscheinlichkeiten, die notwendig sind, um den Zuwachs der Sprachmodellentropie zu bestimmen, neu berechnet (vgl. Schritt 706).

In **Fig.8** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

**Fig.1** stellt einzelne Schritte des Verfahrens zur Bestimmung einer Wahrscheinlichkeit für das Auftreten einer Folge von mindestens zwei Wörtern bei einer Spracherkennung durch einen Rechner dar. In einem Schritt 101 wird Sprache in linguistische Klassen

$$(c_1, \ldots, c_k) \qquad (2)$$

unterteilt:

$$(c_1, \ldots, c_k) = F\Big(\big(f_1, v_{11}, \ldots, v_{1j}\big) \cdots \big(f_m, v_{m1}, \ldots, v_{mj}\big)\Big) \qquad (3),$$

wobei

$f_m$      ein linguistisches Merkmal,
m      die Anzahl linguistischer Merkmale,
$v_{m1}...v_{mj}$      die linguistischen Werte des linguistischen Merkmals $f_m$,
j      die Anzahl der linguistischen Werte,
$C_i$      die linguistische Klasse mit i=1..k,
k      die Anzahl der linguistischen Klassen,
F      eine Abbildungsvorschrift (Klassifikator) von linguistischen Merkmalen und linguistischen Werten auf linguistische Klasse

bezeichnen.

Eine ausführliche Erklärung der linguistischen Merkmale und der linguistischen Werte findet sich in [3], z.B. auf Seite 1201 in Tabelle 4 wird eine beispielhafte Aufstellung von linguistischen Merkmalen mit zugehörigen linguistischen Werten abhängig von unterschiedlichen Kategorien gezeigt.

In einem Schritt 102 wird einem Wort mindestens eine der linguistischen Klassen zugeordnet. Wie in [3] beschrieben ist, kann einem Wort eine oder mehrere der linguistischen Klassen zugeordnet werden.

Schließlich wird in einem Schritt 103 die Wahrscheinlichkeit P(W) für das Auftreten der Folge von mindestens zwei Wörtern bestimmt durch

$$P(W) \approx \prod_{i=1}^{n} \sum_{C_i} \sum_{C_{i-1}} P\left(w_i \mid C_i\right) \times P\left(C_i \mid C_{i-1}\right) \times P\left(C_{i-1} \mid w_{i-1}\right) \quad (4)$$

wobei

W      die Folge von mindestens zwei Wörtern,
$w_i$      das i-te Wort der Folge W mit (i=1..n),
n      die Anzahl der Wörter $w_i$ der Folge W,
$C_i$      eine linguistische Klasse, die zu einem Wort $w_i$ gehört,
$C_{i-1}$      eine linguistische Klasse, die zu einem Wort $w_{i-1}$ gehört,
$\Sigma_{Ci}$      die Summe über alle linguistischen Klassen C, die zu einem Wort $w_i$ gehören,
$P(w_i|C_i)$      die bedingte Wortwahrscheinlichkeit,
$P(C_i|C_{i-1})$      die Wahrscheinlichkeit für Bigramme (auch: Klassen-Bigramme, Bigramm-Wahrscheinlichkeit),
$P(C_{i-1}|w_{i-1})$      die bedingte Klassenwahrscheinlichkeit

bezeichnen.

Die Gleichung (4) besteht aus einer kaskadierten Multiplikation dreier Komponenten

$$P\left(C_i \mid C_{i-1}\right), \quad P\left(w_i \mid C_i\right) \quad \text{und} \quad P\left(C_{i-1} \mid w_{i-1}\right),$$

die nachfolgend im einzelnen bestimmt werden.

**Bestimmung der Wahrscheinlichkeit $P(C_i|C_{i-1})$:**

Vokabeln des Textes für die neue Domäne werden mit Hilfe eines linguistischen Lexikons unter Verwendung eines Klassifikators F, wie in Gleichung (3) gezeigt, linguistischen Klassen zugeordnet. Dabei wird jedes neue Wort automatisch mindestens einer linguistischen Klasse zugeordnet. Ein Basissprachmodell umfaßt Wahrscheinlichkeiten für Klassen-Bigramme [3], wobei diese Wahrscheinlichkeit einerseits eine grammatikalische Struktur repräsentiert, andererseits von den einzelnen Wörtern unabhängig ist. Wird nun davon ausgegangen, daß die Domäne, also der spezielle anwendungsbezogene Themenbereich, von einer ähnlichen Textstruktur ist wie der dem Basissprachmodell zugrundeliegende Trainingstext, so wird die Wahrscheinlichkeit für Klassen-Bigramme

$$P\left(C_i \mid C_{i-1}\right)$$

aus dem Basissprachmodell unverändert übernommen. Eine solche automatische Zuordnung ist möglich, da, weitgehend unabhängig vom Inhalt eines Textes, davon ausgegangen werden kann, daß linguistische Merkmale und linguistische Werte, also eine Abbildung in linguistische Klassen (siehe Gleichung (3)), eigentümlich für eine Sprache sind und daher vorteilhaft von einem Themenbereich (Domäne) auf einen anderen Themenbereich übertragen werden können. Grammatikalische Strukturen vieler Trainingstexte sind ähnlich bzw. gleich, unabhängig von dem den jeweiligen Trainingstexten zugrundeliegenden Themenbereich (Domäne). Die Wahrscheinlichkeit

$$P\left(C_i \mid C_{i-1}\right),$$

die für das Basissprachmodell aufgrund von vorausgegangenen Trainingsdurchgängen bestimmt wurde, stellt in Bezug auf die Klassenzuordnung des Vokabulars des neuen Textes ein Grundwissen dar, das nicht erneut bestimmt werden muß, sondern, so das Basissprachmodell einen ausreichenden Grad an Ausführlichkeit aufweist, übernommen werden kann.

**Bestimmung der Wahrscheinlichkeit $P(w_i|C_i)$:**

Die Wahrscheinlichkeit

$$P\left(w_i \mid C_i\right)$$

für alle bezüglich des Basissprachmodells neuen Wörter $w_i$ ist neu zu berechnen und die Wahrscheinlichkeit

$$P\left(w_i \mid C_i\right)$$

(Wortwahrscheinlichkeit) des im Basissprachmodell vorhandenen Vokabulars ist vorzugsweise entsprechend anzupassen. Zur Bestimmung der Wahrscheinlichkeit

$$P\left(w_i \mid C_i\right)$$

werden nachfolgend *drei* unterschiedliche Methoden erläutert:

<u>Methode 1:</u>

Die Wahrscheinlichkeit

$$P\left(w_i \mid C_i\right)$$

für alle neuen Wörter $w_i$ der neuen Domäne wird auf Basis des Textes für die neue Domäne abgeschätzt. Es wird ausgegangen von einem auf linguistischen Klassen basierenden Basissprachmodell, wobei die neu abgeschätzte Wahrscheinlichkeit

$$P\left(w_i \mid C_i\right)$$

vorzugsweise in das Basissprachmodell übernommen wird und somit eine Adaption des Basissprachmodells anhand des neuen Textes erfolgt. Vorzugsweise wird diese Vorgehensweise verwendet, wenn der neue Text für die neue Domäne einen ausreichenden Umfang aufweist. Jedem Wort des neuen Textes wird die im Satzkontext ermittelte mindestens eine linguistische Klasse zugewiesen. Dies wird anhand des in [3] beschriebenen "Tagging-Tools" durchgeführt. Die Wahrscheinlichkeit

$$P\left(w_i \mid c_i\right)$$

für jedes neue Wort $w_i$ wird anhand des neuen Textes abgeschätzt.

In **Fig.2** ist ein erstes Adaptionsverfahren zur Bestimmung der Wortwahrscheinlichkeit

$$P\left(w_i \mid c_i\right)$$

dargestellt. Mittels des Klassifikators F 211 und des linguistischen Lexikons 206 wird unter Verwendung des Tagging-Tools 202 (siehe detaillierte Erläuterungen zu dem Tagging-Tool unter [3]) sowohl aus einer Datenbasis aus großen Texten 201 ein großer "getaggter" Text 203 als auch aus einer Datenbasis aus einem kleinen Text der neuen Domäne (also dem neuen Text) 207 ein kleiner "getaggter" Text 208 bestimmt. Aus dem großen "getaggten" Text 203 wird mittels eines Sprachmodellgenerators 204 ein Basissprachmodell 205, das auf linguistischen Klassen beruht, bestimmt. Wie oben ausführlich beschrieben wurde, geht die Wahrscheinlichkeit

$$P\left(c_i \mid c_{i-1}\right)$$

unverändert in das Sprachmodell für die neue Domäne ein. Aus dem "getaggten" kleinen Text 208 wird mittels eines Adaptions-Tools 209, das eine Abschätzung der Wahrscheinlichkeit

$$P\left(w_i \mid c_i\right)$$

mittels des "getaggten" kleinen Textes durchführt, ein neues, vorzugsweise adaptiertes, Sprachmodell 210 bestimmt. Neben der beschriebenen Adaption kann ohne Einschränkung auch ein weiteres Sprachmodell erzeugt werden.

Methode 2:

Ein weiteres Verfahren reduziert die durch das Basissprachmodell gegebenen einzelnen Wortwahrscheinlichkeiten

$$P\left(w_i \mid c_i\right)$$

und überträgt den reduzierten Beitrag auf das in der jeweiligen linguistischen Klasse $c_i$ zu ergänzende Vokabular (Wörter). Dies wird abhängig von den jeweiligen Werten $P(w_i)$ der neuen Wörter durchgeführt.

In **Fig.3** ist dieses zweite Adaptionsverfahren zur Bestimmung der Wahrscheinlichkeit

$$P\left(w_i \mid c_i\right)$$

dargestellt. Mittels des Klassifikators F 311 und des linguistischen Lexikons 306 wird anhand des Tagging-Tools 302 aus einer Datenbasis aus großen Texten 301 ein "getaggter" großer Text 303 bestimmt. Mit einem Sprachmodellgenerator 304 wird aus dem "getaggten" großen Text 303 ein Basissprachmodell 305, das auf linguistischen Klassen beruht, erstellt. Aus dem Basissprachmodell 305 wird die Wahrscheinlichkeit

$$P\left(c_i \mid c_{i-1}\right)$$

unverändert übernommen. Anhand einer Wortliste für die neue Domäne 307 wird mittels eines Adaptions-Tools 308 ein adaptiertes Sprachmodell 309 bestimmt. Auch hier kann eine Adaption eine Veränderung oder eine Erzeugung eines Sprachmodells umfassen. Das Adaptions-Tool 308 berechnet die Wahrscheinlichkeit

$$P\left(w_i | C_i\right)$$

für neue Wörter aus der Wahrscheinlichkeit $P(w_i)$ und führt eine Renormierung der Wahrscheinlichkeit

$$P\left(w_i | C_i\right)$$

des Basissprachmodells durch. Nachfolgend wird dieses Verfahren detailliert beschrieben.

Die folgenden Größen sind durch das Basissprachmodell gegeben:

$w_i$   Vokabular des Basissprachmodells mit i=1,...,N,

N   Anzahl des Vokabulars des Basissprachmodells,

$N_C$   Anzahl der Wörter in der jeweiligen Klasse C des Basissprachmodells,

k   Anzahl der Klassen des Basissprachmodells,

$$P\left(C_j\right)$$

für j=0,...,k; Unigramm-Wahrscheinlichkeiten für die Klassen des Basissprachmodells,

$$P\left(C_j | C_{j-1}\right)$$

für j=1,...,k; Bigramm-Wahrscheinlichkeiten für die Klassen des Basissprachmodells,

$$P\left(w_i | C_j(w_i)\right) \quad \text{und} \quad P\left(C_j(w_i) | w_i\right)$$

Wortwahrscheinlichkeiten des Basissprachmodells für alle Wörter $w_i$, mit i=1,...,N, und alle Klassen

$$C_j(w_i)$$

mit j=0,..., k, für die gilt: Wort $w_i$ liegt in der linguistischen Klassen $C_j$.

Die Bildung linguistischer Klassen eines Sprachmodells für die neue Domäne entspricht der Bildung linguistischer Klassen für das Basissprachmodell. Der Klassifikator F (siehe Gleichung (3)) des Basissprachmodells wird übernommen. Also ist die Anzahl der linguistischen Klassen k unverändert. Es wird für die neue Domäne von Texten ähnlicher Struktur wie dem Basissprachmodell zugrundeliegende Trainingstexte ausgegangen. Die Wahrscheinlichkeit der Klassen-Bigramme

$$P\left(C_i | C_{i-1}\right)$$

und die Wahrscheinlichkeit von Klassen-Unigrammen $P(C_j)$ des Basissprachmodells bleiben unverändert.

Zu betrachten bleiben die Wahrscheinlichkeit

$$P\left(w_i \mid C_j(w_i)\right)$$

und die Wahrscheinlichkeit

$$P\left(C_j(w_i) \mid w_i\right),$$

die sich jeweils auf einzelne Wörter beziehen. Die Wahrscheinlichkeit

$$P\left(w_i \mid C_j(w_i)\right)$$

und die Wahrscheinlichkeit

$$P\left(C_j(w_i) \mid w_i\right)$$

werden für die nicht im Basissprachmodell enthaltenen Wörter der neuen Domäne neu berechnet. Bereits vorhandene Wahrscheinlichkeiten für die Wörter des Basissprachmodells sind zu reskalieren.

Für die neue Domäne sind folgende Werte gegeben:

$w_h$      Vokabular der neuen Domäne mit h=1,...,L, das nicht im Basissprachmodell enthalten ist.

$L$      Anzahl des Vokabulars im Sprachmodell für die neue Domäne (Zielsprachmodell),

$L_C$      Anzahl der neuen Wörter $w_h$ und der Wörter $w_i$ des Basissprachmodells in der jeweiligen (linguistischen) Klasse C,

$P(w_h)$      klassenunabhängige Wortwahrscheinlichkeiten in der neuen Domäne.

Die Wahrscheinlichkeit $P(w_h)$ ist gegeben durch eine Wortliste mit Worthäufigkeiten und die Größe des zugrundeliegenden Textes.

Abschätzung der Wahrscheinlichkeit

$$P\left(C_j(w_h) \mid w_h\right):$$

Zur Abschätzung der Wahrscheinlichkeit

$$P\left(C_j(w_h) \mid w_h\right),$$

jeweils für das neue Vokabular $w_h$, wird davon ausgegangen, daß

$$P\left(C_j(w_h) \mid w_h\right)$$

annähernd gleich ist für Wörter, die in derselben Klasse $C_j$ liegen. Demnach gilt folgende Näherung:

$$P\left(C_j \mid w_h\right) \approx \frac{1}{N_C} \times \sum_{i=1}^{N_C} P\left(C_j \mid w_i\right) \tag{12},$$

wobei $w_i$ alle Wörter des Basissprachmodells bezeichnet, die in der Klasse $C_j$ liegen.

Für die folgenden Ausführungen wird exemplarisch eine Klasse $C_j$ untersucht. Zur vereinfachten Darstellung wird im folgenden diese Klasse $C_j$ als Klasse C bezeichnet.

Vorhandene Wahrscheinlichkeitswerte sind zu renormieren. Nachfolgend werden die "alten" Werte mit einer Tilde gekennzeichnet.

Eine weitere Näherungslösung für die Gleichung (12) ist die Summe über die Wörter $w_i$, für die alle linguistischen Klassen mit den Klassen des neuen Wortes übereinstimmen.

Zur Berechnung der neuen Wahrscheinlichkeit

$$P\left(w_h \mid C\left(w_h\right)\right)$$

bzw. zur Renormierung der gegebenen Wahrscheinlichkeiten $P(w_i|C(w_i))$ wird folgendes Verfahren angewandt:

1) Bestimmung des Anteils $\alpha$ der neuen Wörter im Wortschatz

2) Renormierung von

$$\tilde{P}\left(w\right) \tag{13}$$

mit:

$$P\left(w_i\right) = \left(1 - \alpha\right) \times \tilde{P}\left(w_i\right) \tag{14}$$

Bestimmung des Anteils $\alpha$ gemäß Gleichung (17)

3) Bestimmung des Anteils $1-\gamma_C$ der neuen Wörter in der Klasse C,

4) Bestimmung von

$$\tilde{P}\left(w_h \mid C\right)$$

gemäß Gleichung (23),

5) Bestimmung von $\gamma_C$ nach Gleichung (22),

6) Bestimmung der Wahrscheinlichkeit

$$P\left(w_h \mid C\left(w_h\right)\right)$$

durch:

$$P\left(w_h \mid C\right) = \frac{\gamma_C}{1 - \alpha} \tilde{P}\left(w_h \mid C\right) \tag{15},$$

siehe auch Gleichung (22). Der Faktor kann als Quotient der Anteile der alten Wörter in der linguistischen Klasse C und dem Anteil des alten Wortschatzes im Gesamtwortschatz interpretiert werden.

Zur Bestimmung des Anteils $\alpha$ folgt mit Gleichung (14):

$$1 = \sum_{i=1}^{N_C} \tilde{P}\left(w_i\right) = \sum_{i=1}^{N_C} P\left(w_i\right) + \sum_{h=N_C+1}^{L_C} P\left(w_h\right) =$$

$$\tag{16},$$

$$= (1 - \alpha) \times \sum_{i=1}^{N_C} \tilde{P}\left(w_i\right) + \sum_{h=N_C+1}^{L_C} P\left(w_h\right)$$

daraus folgt:

$$\alpha = \sum_{h=N_C+1}^{L_C} P\left(w_h\right) \tag{17}.$$

Zur Bestimmung des Anteils $\gamma_C$ wird der Satz von Bayes auf Gleichung (12) (siehe hierzu [5]) angewandt. Es folgt:

$$P\left(w_h \mid C\right) = \frac{P\left(w_h\right)}{N_C} \times \sum_{i=1}^{N_C} \frac{P\left(w_i \mid C\right)}{P\left(w_i\right)} \tag{18}.$$

Anhand von Gleichung (18) und unter Anwendung der Normierungseigenschaft für Wahrscheinlichkeitswerte (siehe [6]) kann gezeigt werden:

$$\sum_{i=1}^{N_C} P\left(w_i \mid C\right) + \sum_{h=N_C+1}^{L_C} \frac{P\left(w_h\right)}{N_C} \times \sum_{i=1}^{N_C} \frac{P\left(w_i \mid C\right)}{P\left(w_i\right)} = 1 \tag{19}.$$

Für

$$P\left(w_i \mid C\right) = \gamma_C \times \tilde{P}\left(w_i \mid C\right) \tag{20}$$

mit $\gamma_C \leq 1$ and

$$\tilde{P}\left(w_i \mid C\right)$$

als alte (nicht renormierte) Verteilung, gilt:

$$\left(1 + \sum_{h=N_C+1}^{L_C} \frac{P\left(w_h\right)}{N_C} \times \sum_{i=1}^{N_C} \frac{\tilde{P}\left(w_i \mid C\right)}{P\left(w_i\right)}\right) \times \gamma_C = 1 \qquad (21).$$

Daraus folgt mit Gleichung (14):

$$\gamma_C = \left(1 + \frac{1}{1-\alpha} \times \sum_{h=N_C+1}^{L_C} \tilde{P}\left(w_h \mid C\right)\right)^{-1} \qquad (22)$$

mit

$$\tilde{P}\left(w_h \mid C\right) = \frac{P\left(w_h\right)}{N_C} \times \sum_{i=1}^{N_C} \frac{\tilde{P}\left(w_i \mid C\right)}{\tilde{P}\left(w_i\right)} \qquad (23).$$

Methode 3:

Die Wahrscheinlichkeit

$$P\left(w_i \mid C_i\right)$$

für bezüglich des Basissprachmodells neue Wörter $w_i$ wird unter Verwendung einer entsprechenden Wortliste angenähert. Bei dieser Vorgehensweise wird die Lösungsstrategie von dem unter 'Methade 2' beschriebenen Verfahren übernommen. Die hier nicht vorhandene Wahrscheinlichkeit $P(w_h)$ für die neuen Wörter $w_h$ wird angenähert. Dies erfolgt insbesondere in Abhängigkeit zu einer Hauptkategorie HC des jeweiligen Wortes $w_h$. Es ergibt sich näherungsweise:

$$P\left(w_h\right) \approx \frac{1}{N_{HC}} \times \left(\sum_{w_i \text{ aus } HC} \left(\sum_{C_j(w_i)} P\left(w_i \mid C_j\right) \times P\left(C_j\right)\right)\right) \qquad (24)$$

Hierzu werden Eigenschaften von Wörtern $w_i$ des Basissprachmodells verwendet. $N_{HC}$ ist eine Anzahl des Vokabulars des Basissprachmodells, das in der Hauptkategorie HC liegt. Die Summierung läuft über alle Klassen $C_j$

des Basissprachmodells, zu denen das jeweilige Wort $w_i$ gehört.

Ist keine Hauptkategorie bekannt, so können die Wörter $w_h$ der speziellen linguistischen Klasse der Wörter mit unbekannten oder nicht anders abbildbaren linguistischen Eigenschaften zugeordnet werden.

**Bestimmung der Wahrscheinlichkeit $P(C_{i-1}|w_{i-1})$:**

Schließlich wird die Wahrscheinlichkeit

$$P\left(C_{i-1}| w_{i-1}\right)$$

wie nachfolgend beschrieben bestimmt. Es sei angemerkt, daß in Gleichung (4) die Wahrscheinlichkeit

$$P\left(C_{i-1}| w_{i-1}\right)$$

einen Index 'i-1' aufweist, der nachfolgend zur Vereinfachung als Index i gesetzt wird.

Die Wahrscheinlichkeit

$$P\left(C_i| w_i\right)$$

ergibt sich jeweils aus der Wahrscheinlichkeit

$$P\left(w_i| C_i\right),$$

die wie oben beschrieben, bestimmt worden ist:

$$P\left(C_i| w_i\right) = K \times P\left(w_i| C_i\right) \times P\left(C_i\right) \qquad (5)$$

mit einem Normalisierungsfaktor

$$K = \left(\sum_{C_i} P\left(w_i| C_i\right) \times P\left(C_i\right)\right)^{-1} \qquad (6).$$

Die linguistische Klasse $C_i$ durchläuft dabei alle für das Wort $w_i$ möglichen linguistischen Klassen. Die Wahrscheinlichkeit $P(C_i)$ wird aus dem Basissprachmodell übernommen (Unigramm-Wahrscheinlichkeit für jeweilige linguistische Klasse des Basissprachmodells).

Literaturverzeichnis:

[1] G. Ruske: "Automatische Spracherkennung - Methoden der Klassifikation und Merkmalsextraktion", Oldenbourg Verlag, München 1988, ISBN 3-486-20877-2, Seiten 1-10.

[2] L. Rabiner, B.-H. Juang: "Fundamentals of Speech Recognition", Prentice Hall 1993, S.447-450.

[3] P. Witschel: "Constructing Linguistic Oriented Language Models for Large Vocabulary Speech Recognition", 3rd EUROSPEECH 1993, Seiten 1199-1202.

[4] F. Guethner, P. Maier: "Das CISLEX-Wörterbuchsystem", CIS-Bericht 94-76-CIS, Universität München, 1994.

[5] W. Feller: "An Introduction to Probability Theory and its Applications", John Wiley & Sons, 1976, Seiten 124,125.

[6] W. Feller: "An Introduction to Probability Theory and its Applications", John Wiley & Sons, 1976, Seite 22.

[7] S. Martin, J. Liermann, H. Ney: "Algorithms for Bigram and Trigram Word Clustering", Speech Communication 24, 1998, Seiten 19-37.

**Patentansprüche**

1. Verfahren zur Klassenbildung für ein Sprachmodell basierend auf linguistischen Klassen durch einen Rechner,

   a) bei dem anhand einer ersten Abbildungsvorschrift eine Anzahl N von Klassen bestimmt wird mittels eines vorgegebenen Vokabulars mit zugehörigen linguistischen Eigenschaften;
   b) bei dem K Klassen aus den N Klassen ermittelt werden, indem eine Sprachmodellentropie minimiert wird;
   c) bei dem anhand der K Klassen eine zweite Abbildungsvorschrift zur Klassenbildung von Sprachmodellen auf linguistische Klassen dargestellt wird.

2. Verfahren nach Anspruch 1,
   bei dem die N Klassen ermittelt werden, indem alle möglichen Kombinationen von linguistischen Merkmalen und zugehörigen linguistischen Werten bestimmt werden und jede der Kombinationen eine Klasse ergibt.

3. Verfahren nach einem der vorhergehenden Ansprüche,
   bei dem die linguistischen Werte anhand eines linguistischen Lexikons ermittelt werden.

4. Verfahren zur Klassenbildung für ein Sprachmodell basierend auf linguistischen Klassen durch einen Rechner,

   a) bei dem anhand einer ersten Abbildungsvorschrift N Klassen vorgegeben sind;
   b) bei dem K Klassen aus den N Klassen ermittelt werden, indem eine Sprachmodellentropie minimiert wird;
   c) bei dem anhand der K Klassen eine zweite Abbildungsvorschrift zur Klassenbildung von Sprachmodellen auf linguistische Klassen dargestellt wird.

5. Verfahren nach einem der vorhergehenden Ansprüche, bei dem die K Klassen bestimmt werden, indem folgende Schritte durchgeführt werden:

   a) Eine Anzahl M der wahrscheinlichsten unter den N Klassen werden als Basisklassen ermittelt;
   b) eine der verbleibenden (N-M) Klassen wird mit derjenigen Basisklasse zusammengelegt, bei der die Sprachmodellentropie minimiert wird

6. Verfahren nach einem der vorhergehenden Ansprüche, bei dem die Sprachmodellentropie bestimmt ist durch

$$H(LM) = -\frac{1}{n} \cdot \log P(W),$$

wobei

H(LM)    die Sprachmodellentropie des Sprachmodells,
n    die Anzahl der Wörter des Textes,
W    eine Kette von Wörtern $w_0, w_1,.., w_n$,
P(W)    eine Wahrscheinlichkeit für das Auftreten einer Folge von mindestens zwei Wörtern

beschreiben.

7. Verfahren nach einem der vorhergehenden Ansprüche zur Bestimmung einer Wahrscheinlichkeit für das Auftreten einer Folge von mindestens zwei Wörtern bei einer Spracherkennung,

   a) bei dem eine Sprache linguistische Klassen aufweist:

$$\left(c_1, \ldots, c_k\right) \;=\; F\left(\left(f_1, v_{11}, \ldots, v_{1j}\right) \ldots \left(f_m, v_{m1}, \ldots, v_{mj}\right)\right),$$

   wobei

   | | |
   |---|---|
   | $f_m$ | ein linguistisches Merkmal, |
   | $m$ | die Anzahl linguistischer Merkmale, |
   | $v_{m1}...v_{mj}$ | die linguistischen Werte des linguistischen Merkmals $f_m$, |
   | $j$ | die Anzahl der linguistischen Werte, |
   | $C_1,...,C_k$ | die linguistische Klassen, |
   | $k$ | die Anzahl der linguistischen Klassen, |
   | $F$ | die zweite Abbildungsvorschrift (Klassifikator) von linguistischen Merkmalen und linguistischen Werten auf linguistische Klassen |

   bezeichnen
   b) bei dem einem Wort mindestens eine der linguistischen Klassen zugeordnet wird;
   c) bei dem die Wahrscheinlichkeit für das Auftreten der Folge von mindestens zwei Wörtern bestimmt ist durch:

$$P(W) \;\approx\; \prod_{i=1}^{n} \sum_{C_i} \sum_{C_{i-1}} P\left(w_i \mid C_i\right) \times P\left(C_i \mid C_{i-1}\right) \times P\left(C_{i-1} \mid w_{i-1}\right)$$

   wobei

   | | |
   |---|---|
   | $P(W)$ | Wahrscheinlichkeit für das Auftreten der Folge von mindestens zwei Wörtern |
   | $W$ | die Folge von mindestens zwei Wörtern, |
   | $w_i$ | das i-te Wort der Folge W mit (i=1..n), |
   | $n$ | die Anzahl der Wörter $w_i$ der Folge W, |
   | $C_i$ | eine linguistische Klasse C, die zu einem Wort $w_i$ gehört, |
   | $C_{i-1}$ | eine linguistische Klasse, die zu einem Wort $w_{i-1}$ gehört, |
   | $\Sigma_{Ci}$ | die Summe über alle linguistischen Klassen C, die zu einem Wort $w_i$ gehören, |
   | $P(w_i\mid C_i)$ | die bedingte Wortwahrscheinlichkeit, |
   | $P(C_i\mid C_{i-1})$ | die Wahrscheinlichkeit für Bigramme (auch: Klassen-Bigramme, Bigramm-Wahrscheinlichkeit), |
   | $P(C_{i-1}\mid w_{i-1})$ | die bedingte Klassenwahrscheinlichkeit bezeichnen. |

8. Verfahren nach Anspruch 7,
   bei dem für einen Text anhand eines vorbestimmten Basissprachmodells die Wahrscheinlichkeit

$$P\left(C_i \mid C_{i-1}\right)$$

   für den Text bestimmt wird, indem die Wahrscheinlichkeit

$$P\left(C_i \mid C_{i-1}\right)$$

   aus dem Basissprachmodell übernommen wird.

9. Verfahren nach Anspruch 8,
   bei dem die Wahrscheinlichkeit

$$P\left(w_i\,|\,C_i\right)$$

nach mindestens einer der folgenden Möglichkeiten bestimmt wird:

a) die Wahrscheinlichkeit

$$P\left(w_i\,|\,C_i\right)$$

wird anhand des Textes bestimmt;
b) die Wahrscheinlichkeit

$$P\left(w_i\,|\,C_i\right)$$

wird für ein Wort $w_i$ mit Hilfe einer vorgegebenen Wahrscheinlichkeit $P(w_i)$ bestimmt;
c) die Wahrscheinlichkeit

$$P\left(w_i\,|\,C_i\right)$$

wird unter Verwendung einer Wortliste bestimmt.

**10.** Verfahren nach Anspruch 9,
bei dem anhand der ermittelten Wahrscheinlichkeit

$$P\left(w_i\,|\,C_i\right)$$

das Basissprachmodell angepaßt wird.

**11.** Verfahren nach Anspruch 9 oder 10,
bei dem die Wahrscheinlichkeit

$$P\left(w_i\,|\,C_i\right)$$

anhand der Wahrscheinlichkeit

$$P\left(w_i\,|\,C_i\right)$$

wie folgt bestimmt wird:

$$P\left(C_i\,|\,w_i\right) \;=\; K \,\times\, P\!\left(w_i\,|\,C_i\right) \,\times\, P(C_i),$$

wobei

$$K \;=\; \left(\sum_{C_i} P\left(w_i\,|\,C_i\right) \,\times\, P\left(C_i\right)\right)^{-1}$$

einen Normalisierungsfaktor bezeichnet.

**12.** Verfahren nach einem der Ansprüche 7 bis 11,
bei dem, wenn die Wahrscheinlichkeit P(W) für das Auftreten einer Folge von mindestens einem Wort oberhalb einer vorgegebenen Schranke liegt, die entsprechende Folge von mindestens einem Wort erkannt wird, ansonsten eine vorgegebene Aktion durchgeführt wird.

**13.** Verfahren nach Anspruch 12,
bei dem die vorgegebene Aktion eine Ausgabe einer Fehlermeldung oder Anlaß für einen Abbruch des Verfahrens ist.

**14.** Verfahren nach einem der Ansprüche 8 bis 13,
bei dem sich der Text auf einen vorgegebenen Anwendungsbereich (Domäne, Sprachdomäne) bezieht.

**15.** Anordnung zur Klassenbildung für ein Sprachmodell basierend auf linguistischen Klassen mit einer Prozessoreinheit, die derart eingerichtet ist, daß

a) anhand einer ersten Abbildungsvorschrift eine Anzahl N von Klassen bestimmbar ist mittels eines vorgegebenen Vokabulars mit zugehörigen linguistischen Eigenschaften;
b) K Klassen aus den N Klassen ermittelt werden, indem eine Sprachmodellentropie minimiert wird;
c) anhand der K Klassen eine zweite Abbildungsvorschrift zur Klassenbildung von Sprachmodellen auf linguistische Klassen erfolgt.

**16.** Anordnung zur Klassenbildung für ein Sprachmodell basierend auf linguistischen Klassen mit einer Prozessoreinheit, die derart eingerichtet ist, daß

a) anhand einer ersten Abbildungsvorschrift N Klassen vorgebbar sind;
b) K Klassen aus den N Klassen ermittelt werden, indem eine Sprachmodellentropie minimiert wird;
c) anhand der K Klassen eine zweite Abbildungsvorschrift zur Klassenbildung von Sprachmodellen auf linguistische Klassen erfolgt.

**Claims**

**1.** Method for forming classes for a language model based on linguistic classes by means of a computer,

a) in which a first mapping rule is used to determine a number N of classes by means of a prescribed vocabulary with associated linguistic properties;
b) in which K classes are determined from the N classes by minimizing a language model entropy; and
c) in which the K classes are used to represent a second mapping rule for forming classes of language models onto linguistic classes.

**2.** Method according to Claim 1, in which the N classes are determined in that all possible combinations of linguistic features and associated linguistic values are determined, and each of the combinations yields a class.

**3.** Method according to one of the preceding claims, in which a linguistic lexicon is used to determine the linguistic values.

**4.** Method for forming classes for a language model based on linguistic classes by means of a computer,

a) in which a first mapping rule is used to prescribe N classes;
b) in which K classes are determined from the N classes by minimizing a language model entropy; and
c) in which the K classes are used to represent a second mapping rule for forming classes of language models onto linguistic classes.

**5.** Method according to one of the preceding claims, in which the K classes are determined by carrying out the following steps:

a) a number M of the most probable of the N classes are determined as base classes; and
b) one of the remaining (N-M) classes is merged with that base class for which the language model entropy is minimized.

**6.** Method according to one of the preceding claims, in which the language model entropy is determined by means of

$$H(LM) = -\frac{1}{n} \cdot \log P(W),$$

where

H(LM)   denotes the language model entropy of the language model,
n   denotes the number of words in the text,
W   denotes a chain of words $w_0$, $w_1$, ..., $w_n$, and
P(W)   denotes a probability of the occurrence of a sequence of at least two words.

**7.** Method according to one of the preceding claims for determining a probability of the occurrence of a sequence of at least two words in the case of speech recognition,

a) in which a language has linguistic classes:

$$(C_1, \ldots, C_k) = F\left(\left(f_1, v_{11}, \ldots, v_{1j}\right) \ldots \left(f_m, v_{m1}, \ldots, v_{mj}\right)\right),$$

where

$f_m$   denotes a linguistic feature,
m   denotes the number of linguistic features,
$v_{m1}...v_{mj}$   denotes the linguistic values of the linguistic feature $f_m$,
j   denotes the number of linguistic values,
$C_1,...,C_k$   denotes the linguistic classes,
k   denotes the number of linguistic classes, and
F   denotes the second mapping rule (classifier) of linguistic features and linguistic values onto linguistic classes;

b) in which at least one of the linguistic classes is assigned to a word; and
c) in which the probability of the occurrence of the sequence of at least two words is determined by means of:

$$P(W) \approx \prod_{i=1}^{n} \sum_{C_i} \sum_{C_{i-1}} P(w_i | C_i) \times P(C_i | C_{i-1}) \times P(C_{i-1} | w_{i-1})$$

where

P(W)   denotes the probability of the occurrence of the sequence of at least two words,
W   denotes the sequence of at least two words,
$w_i$   denotes the ith word of the sequence W with (i=1..n),
n   denotes the number of words $w_i$ in the sequence W,
$C_i$   denotes a linguistic class C which belongs to a word $w_i$,
$C_{i-1}$   denotes a linguistic class which belongs to a word $w_{i-1}$,
$\Sigma C_i$   denotes the sum of all linguistic classes C which belong to a word $w_i$,
$P(w_i|C_i)$   denotes the conditional word probability,
$P(C_i|C_{i-1})$   denotes the probability of bigrams (also: class bigrams, bigram probability), and
$P(C_{i-1}|w_{i-1})$   denotes the conditional class probability.

8. Method according to Claim 7, in which a predetermined basic language model is used to determine for a text the probability $P(C_i|C_{i-1})$ of the text by taking over the probability $P(C_i|C_{i-1})$ from the basic language model.

9. Method according to Claim 8, in which the probability $P(w_i|C_i)$ is determined according to at least one of the following possibilities:

    a) the probability $P(w_i|C_i)$ is determined with the aid of the text;
    b) the probability $P(w_i|C_i)$ is determined for a word $w_i$ with the aid of a prescribed probability $P(w_i)$; and
    c) the probability $P(w_i|C_i)$ is determined by using a word list.

10. Method according to Claim 9, in which the determined probability $P(w_i|C_i)$ is used to adapt the basic language model.

11. Method according to Claim 9 or 10, in which the probability $P(w_i|C_i)$ is used to determine the probability $P(C_i|w_i)$ as follows:

$$P(C_i|w_i) = K \times P(w_i|C_i) \times P(C_i),$$

where

$$K = \left( \sum_{C_i} P(w_i|C_i) \times P(C_i) \right)^{-1}$$

denotes a normalization factor.

12. Method according to one of Claims 7 to 11, in which when the probability $P(W)$ of the occurrence of a sequence of at least one word is above a prescribed bound, the appropriate sequence of at least one word is detected, otherwise a prescribed action is carried out.

13. Method according to Claim 12, in which the prescribed action is outputting an error message or a prompt to stop the method.

14. Method according to one of Claims 8 to 13, in which the text relates to a prescribed application field (domain, language domain).

15. Arrangement for forming classes for a language model based on linguistic classes, having a processor unit which is set up in such a way that

    a) using a first mapping rule, a number N of classes can be determined by means of a prescribed vocabulary with associated linguistic properties;
    b) K classes are determined from the N classes by minimizing a language model entropy; and
    c) the K classes are used to produce a second mapping rule for forming classes of language models onto linguistic classes.

16. Arrangement for forming classes for a language model based on linguistic classes, having a processor unit which is set up in such a way that

    a) N classes can be prescribed using a first mapping rule;
    b) K classes are determined from the N classes by minimizing a language model entropy; and
    c) the K classes are used to produce a second mapping rule for forming classes of language models onto linguistic classes.

**Revendications**

1. Procédé permettant de former des classes pour un modèle de langage basé sur des classes linguistiques par un ordinateur,

   a) dans lequel, à l'aide dune première règle de représentation, un nombre N de classes est déterminé au moyen d'un vocabulaire imposé ayant des propriétés linguistiques associées ;
   b) dans lequel K classes sont calculées à partir des N classes, en minimisant une entropie du modèle de langage ;
   ci dans lequel, à l'aide des K classes, une deuxième règle de représentation est déterminée, permettant de former des classes de modèles de langage sur la base de classes linguistiques.

2. Procédé selon la revendication 1, dans lequel les N classes sont déterminées en calculant toutes les combinaisons possibles de propriétés linguistiques et de valeurs linguistiques associées, chacune des combinaisons donnant une classe.

3. Procédé selon Tune des revendications précédentes, dans lequel les valeurs linguistiques sont déterminées à l'aide d'un lexique linguistique.

4. Procédé permettant de former des classes pour un modèle de langage basé sur des classes linguistiques par un ordinateur,

   a) dans lequel, à l'aide dune première règle de représentation, N classes sont imposées ;
   b) dans lequel K classes sont calculées à partir des N classes, en minimisant une entropie du modèle de langage ;
   c) dans lequel, à l'aide des K classes, une deuxième règle de représentation est déterminée, permettant de former des classes de modèles de langage sur la base de classes linguistiques.

5. Procédé selon l'une des revendications précédentes, dans lequel les K classes sont déterminées en effectuant les étapes suivantes :

   a) un nombre M des plus probables parmi les N classes est calculé, constituant les classes de base ;
   b) une des (N-M) classes restantes est réunie avec la classe de base dans laquelle l'entropie du modèle de langage est minimisée.

6. Procédé selon l'une des revendications précédentes, dans lequel l'entropie du modèle de langage est définie par

$$H(LM) = -\frac{1}{n} \cdot \log P(W),$$

où

H(LM)   décrit l'entropie du modèle de langage,
n       le nombre de mots du texte,
W       une chaîne de mots $w_0$, $w_1$, .., $w_n$,
P(W)    une probabilité de l'apparition dune suite d'au moins deux mots.

7. Procédé selon l'une des revendications précédentes, permettant de définir la probabilité de l'apparition d'une suite d'au moins deux mots dans le cas d'une reconnaissance de la parole,

   a) dans lequel un langage comprend des classes linguistiques

$$(C_1,...,C_k) = F((f_1, v_{11}, ..., v_{1j})...(f_m, v_{m1}, ..., V_{mj})),$$

   où

   $f_m$          désigne une propriété linguistique,

m        le nombre de propriétés linguistiques,

$v_{m1} ... v_{mj}$    les valeurs linguistiques de la propriété linguistique $f_m$,

j         le nombre de valeurs linguistiques,

$C_1,..., C_k$    les classes linguistiques

k         le nombre de classes linguistiques,

F        la deuxième règle de représentation (classificateur) de propriétés linguistiques et de valeurs linguistiques sur la base de classes linguistiques,

b) dans lequel un mot se voit attribuer au moins une des classes linguistiques;

c) dans lequel la probabilité de l'apparition de la suite d'au moins deux mots est déterminée par :

$$P(W) \approx \prod_{i=1}^{n} \sum_{C_i} \sum_{C_{i-1}} P(w_1 \mid C_i) \times P(C_i \mid C_{i-1}) \times P(C_{i-1} \mid w_{i-1})$$

où

P(W)        désigne la probabilité de l'apparition de la suite d'au moins deux mots,

W         la suite d'au moins deux mots,

$w_i$        le i-ième mot de la suite W avec (i=1..n),

n         le nombre de mots $w_i$ de la suite W,

$C_i$         une classe linguistique C appartenant à un mot $w_i$,

$C_{i-1}$       une classe linguistique appartenant à un mot $w_{i-1}$,

$\Sigma_{C_i}$       la somme de toutes les classes linguistiques C appartenant à un mot $w_i$,

$P(w_i \mid C_i)$    la probabilité conditionnelle de mots,

$P(C_i \mid C_{i-1})$   la probabilité de bigrammes (également bigrammes de classes, probabilité bigrammes),

$P(C_{i-1} \mid w_{i-1})$   la probabilité conditionnelle de classes.

8. Procédé selon la revendication 7, dans lequel, pour un texte, à l'aide d'un modèle de langage de base prédéfini, la probabilité $P(C_i \mid C_{i-1})$ du texte est déterminée en reprenant la probabilité $P(C_i \mid C_{i-1})$ dans le modèle de langage de base.

9. Procédé selon la revendication 8, dans lequel la probabilité $P(w_i \mid C_i)$ est déterminée selon au moins une des possibilités suivantes :

a) la probabilité $P(w_i \mid C_i)$ est déterminée à l'aide du texte ;

b) la probabilité $P(w_i \mid C_i)$ est déterminée pour un mot $w_i$ à l'aide d'une probabilité imposée $P(w_i)$ ;

c) la probabilité $P(w_i \mid C_i)$ est déterminée à l'aide d'une liste de mots.

10. Procédé selon la revendication 9, dans lequel, à l'aide de la probabilité $P(w_i \mid C_i)$ déterminée, le modèle de langage de base est adapté.

11. Procédé selon la revendication 9 ou 10, dans lequel la probabilité $P(C_i \mid w_i)$ est déterminée à l'aide de la probabilité $P(w_i \mid C_i)$ de la manière suivante :

$$P(C_i \mid w_i) = K \times P(w_i \mid C_i) \times P(C_i),$$

où

$$K = \left( \sum_{C_i} P(w_i \mid C_i) \times P(C_i) \right)^{-1}$$

désigne un facteur de normalisation.

**12.** Procédé selon l'une des revendications 7 à 11, dans lequel, si la probabilité P(W) de l'apparition d'une suite d'au moins un mot se situe au-delà d'une limite imposée, ladite suite d'au moins un mot est reconnue, sinon une action imposée est effectuée.

**13.** Procédé selon la revendication 12, dans lequel l'action imposée consiste à émettre un message d'erreur ou à provoquer un abandon du procédé.

**14.** Procédé selon l'une des revendications 8 à 13, dans lequel le texte se rapporte à un domaine d'application imposé (domaine, domaine de langage).

**15.** Agencement permettant de former des classes pour un modèle de langage basé sur des classes linguistiques, comprenant une unité centrale configurée de telle sorte que

a) à l'aide dune première règle de représentation, un nombre N de classes peut être déterminé au moyen d'un vocabulaire imposé ayant des propriétés linguistiques associées ;
b) K classes sont calculées à partir des N classes, en minimisant une entropie du modèle de langage ;
c) à l'aide des K classes, une deuxième règle de représentation est déterminée, permettant de former des classes de modèles de langage sur la base de classes linguistiques.

**16.** Agencement permettant de former des classes pour un modèle de langage basé sur des classes linguistiques, comprenant une unité centrale configurée de telle sorte que

a) à l'aide dune première règle de représentation, N classes peuvent être imposées ;
b) K classes sont calculées à partir des N classes, en minimisant une entropie du modèle de langage ;
c) à l'aide des K classes, une deuxième règle de représentation est déterminée, permettant de former des classes de modèles de langage sur la base de classes linguistiques.

# FIG 1

```
┌─────────────────────┐
│    Bestimmung       │ ─── 101
│ des Klassifikators  │
└─────────────────────┘
          │
          ▼
┌─────────────────────┐
│   Klassifizieren    │ ─── 102
│    der Wörter       │
└─────────────────────┘
          │
          ▼
┌─────────────────────┐
│    Bestimmen        │ ─── 103
│    von P(W)         │
└─────────────────────┘
```

# FIG 2

201 — Datenbasis aus großen Texten

211 — Klassifikator F

207 — Datenbasis aus kleinem Text der neuen Domäne

202 — Tagging-Tool

linguist. Lexikon — 206

Tagging-Tool — 202

203 — getaggter großer Text

getaggter kleiner Text — 208

204 — LM-Generator

$P(C_i \mid C_{i-1})$ unverändert

Adaptions-Tool
Verfahren 1: Abschätzung der $P(w_i \mid C_i)$ mittels des getaggten, kleinen Textes

205 — Basis-LM auf Klassen

210 — Adaptiertes LM — 209

## FIG 3

301 — Datenbasis aus großen Texten

311 — Klassifikator F

307 — Wortliste der neuen Domäne

302 — Tagging-Tool

306 — linguist. Lexikon

308 — Adaptions-Tool
Verfahren 2: Berechnung der $P(w_i| Ci)$ für neues Vokabular aus $P(w_i)$, Renormierung der $P(w_i| C_i)$ des Basis-LM.

303 — getaggter großer Text

304 — LM-Generator

305 — Basis-LM auf Klassen

309 — Adaptiertes LM

$P(C_i | C_{i-1})$unverändert
$P(C_i| w_i)$
$P(w_i| C_i)$.

## FIG 4

401 — erste Abbildungsvorschrift

402 — Bestimmung von N Klassen

405 — N Klassen sind vorgegeben

403 — Bestimmung von K Klassen unter Bedingung : Minimierung der Sprachmodellentropie

404 — zweite Abbildungsvorschrift

## FIG 5

## FIG 6

# FIG 7

| | |
|---|---|
| Bestimmte Basis- u. Restklassen der max. Klassenmenge | 701 |
| Iteriere über alle Restklassen (j=M+1, N). | 702 |
|    Iteriere über alle Basisklassen (i=1, M). | 703 |
|       Lege Klasse i und Klasse j zusammen.<br>      Berechne den Zuwachs an Sprachmodellentropie. | 704 |
|    Bestimme die Basisklasse i-min für die beim<br>   Zusammenlegen mit der Klasse j die Sprachmodell-<br>   entropie minimiert wird.<br>   Führe die Vereinigung von Klasse i-min und j durch. | 705 |
| Berechne Sprachmodellwahrscheinlichkeiten. | 706 |

# FIG 8

CPU

MEM
Speicher

Input/Output
IOS

BUS

PRZE

IFC

Monitor
MON

Drucker
PRT

Maus
MAS

Tastatur
TAST